# EUROPÄISCHE PATENTSCHRIFT

(11) **EP 0 674 029 B1**
(45) Veröffentlichungstag und Bekanntmachung des Hinweises auf die Patenterteilung: **21.07.1999**
(21) Anmeldenummer: 95103741.5
(22) Anmeldetag: 15.03.1995
(51) Int. Cl.: D01F 6/92, D01F 6/94, C08L 67/02, C08L 75/04, D21F 1/00

(54) **Abriebfeste Polyester-Polyurethan-Mischung mit erhöhter Verarbeitungssicherheit und Monofilamente daraus**
Abrasion resistant polyester-polyurethane composition with enhanced safety of processing and monofilaments thereof
Composition de polyester-polyuréthane résistante à l'abrasion ayant une sécurité de façonnage augmentée et monofilaments à partir de celle-ci

(30) Priorität: 25.03.1994 DE 4410399
(43) Veröffentlichungstag der Anmeldung: 27.09.1995
(73) Patentinhaber: HOECHST AKTIENGESELLSCHAFT, 65929 Frankfurt am Main (DE)
(72) Erfinder: Wagner, Hans, Dr., D-86399 Bobingen (DE); Espenschied, Bernd, Dr., D-86161 Augsburg (DE)
(74) Vertreter: Luderschmidt, Schüler & Partner GbR

(56) Entgegenhaltungen:
- EP-A- 0 349 875
- EP-A- 0 387 395
- WO-A-84/00303
- WO-A-95/23887
- DE-A- 4 128 274
- FR-A- 2 316 283
- FR-A- 2 328 744
- H. Saechtling: "Kunststoff Taschenbuch"; 22. Ausgabe (1983), Carl Hanser Verlag, München (DE); S. 300

## Beschreibung

Die vorliegende Erfindung betrifft eine abriebfeste Polyestermischung mit erhöhter Verarbeitungssicherheit, daraus ersponnene Monofilamente, die mit besonderem Vorteil zur Herstellung von Papiermaschinensieben eingesetzt werden können, sowie deren Herstellung und Verwendung.

Synthesefasern und -Filamente sowie flächenförmige Materialien, wie Gewebe oder Gewirke daraus, die für technische Anwendungen eingesetzt werden sollen, sind in der Regel weit höheren Beanspruchungen ausgesetzt als Fasermaterialien für rein textile Anwendungen z.B. im Bekleidungssektor.
Eine sehr typische Anwendung technischer Fasermaterialien besteht in der Herstellung von Papiermaschinensieben. Derartige Siebe werden im Einsatz einer Walk-und Dehnbeanspruchung, ständiger Flexion, hohen Temperaturen in feuchter Umgebung und einer hohen Scheuerbeabspruchung ausgesetzt.
Selbst unter diesen mechanischen und chemischen Belastungen müssen die Siebe möglichst lange ihre Festigkeit bewahren, dimensionsstabil sein und ihre Planlage beibehalten, d.h. sie dürfen auch nur eine geringe Quellung durch Wasseraufnahme zeigen.
Insbesondere die Scheuerbeanspruchung, die auf der Unterseite durch Reibung der Siebe an Stützelementen der Papiermaschiene, an Dichtungselementen über den Saugkästen, in deren Bereich das Papiervlies entwässert wird, und im Innern der Siebe durch Reibung der Filamente aneinander und durch die Durchströmung mit abrasive Papierfüller enthaltendem Wasser verursacht wird, spielt für die Haltbarkeit der Siebe eine sehr große Rolle.

Es hat sich als äußerst schwierig erwiesen, ein Material zur Herstellung derartiger Siebe bereitzustellen, das allen genannten Beanspruchungen einen ausreichenden Widerstand entgegensetzt.
Die Original-Foudriner Papiermaschinen hatten Siebe aus Metalldrähten, wobei als Metall Phosphorbronze eingesetzt wurde.
Diese Drähte- widerstehen zwar gut den hohen Temperaturen und der Hydrolysebeanspruchung, sie haben aber ein unbefriedigendes Abriebverhalten.
Es ist auch bereits beschrieben worden, Papiermaschinensiebe aus Polyesterfilamenten, insbesondere Polyethylen- oder Polybutylen-terephthalatfilamenten oder aus Polyamidfilamenten z. B. aus Nylon-6- oder Nylon-66 -Filamenten herzustellen.
Polyesterfilamente haben zwar eine gute dynamische Stabilität und, wegen ihrer geringen Feuchtigkeitsaufnahme, eine gute Dimensionsstabilität aber ihre chemische Beständigkeit bei hohen Temperaturen läßt in der Regel zu wünschen übrig, und insbesondere ihre Abriebfestigkeft entspricht nicht den Forderungen der Papiermaschinenhersteller.
Polyamidfilamente dagegen haben eine gute Abriebfestigkeft zeigen aber eine hohe Feuchtigkeitsaufnahme verbunden mit hoher Quellung und geringen Dimensionsstabilität.
In verschiedenen Druckschriften, wie z.B. der US-A-4 529 013, der US-A-4 289 173 oder der DE-A-2 502 466 sind bereits Versuche beschrieben worden, durch Kombination von Polyester und Polyamidfilamenten Papiermaschienensiebe herzustellen, die den hohen Anforderungen besser gerecht werden.
Diese Versuche haben jedoch nur zu Teilerfolgen geführt; insbesondere ergeben sich neue Schwierigkeiten aus der Verwendung verschiedenartiger Filamentmaterialien in ein und demselben Flächengebilde.

Ein anderer Weg wurde in der EP-A-0 387 395 eingeschlagen. Dort wird empfohlen, Papiermaschinensiebe aus Polyesterfilamenten, insbesondere Polyethylenterephthalat-Filamenten zu weben, wobei der Schuß zumindest teilweise aus Filamenten aus einem Polyester besteht, der 10 bis 40 Gew.-% eines thermoplastischen Urethans und bis zu 5 Gew.-% eines Hydrolysestabilisators enthält.

Ein ähnlicher Vorschlag ist aus der DE-T-3 249 110 bekannt. Dort wird empfohlen, Filamente für Papiermaschinensiebe aus einer Mischung eines Polyesters, einem Polyester-Stabilisator und einem "thermoplastischen Material" herzustellen, wobei als "thermoplastisches Material" ein thermoplastisches Polyurethan oder ein Polyether-Ester-Blockmischpolymerisat eingesetzt werden soll.

In beiden Druckschriften wird ausgeführt, daß diese Polyestermischungen Filamente mit verbesserter Hydrolysebeständigkeit und verbesserter Abriebfestigkeit geben sollen.
Ein gravierender Nachteil dieser bekannten Polyestermischungen besteht allerdings darin, daß sich beim Schmelzspinnen dieser Mischungen in der Schmelze Gasblasen bilden, die die Verarbeitungssicherheit herabsetzen. Diese Gasentwicklung ist vermutlich auf die beginnende Zersetzung der Polyurethan-Komponente zurückzuführen.

Es wurde nun gefunden, daß es gelingt, Polyestermischungen herzustellen, die sich verarbeiten, insbesondere Verspinnen lassen ohne merkliche Gasmengen abzuspalten, und die sich zu Filamenten verspannen lassen, die die guten mechanischen Eigenschaften des Polyesters mit erheblich verbessertem Abriebverhalten vereinen.

Ein Gegenstand der vorliegenden Erfindung ist somit eine abriebfeste Polyestermischung mit erhöhter Verarbeitungssicherheit aus einem thermoplastischen Polyester, einem thermoplastischen Polyurethan und gegebenenfalls üblichen nicht-polymeren Zusätzen, dadurch gekennzeichnet, daß das Polymermaterial der Polyestermischung zu 60 bis 95 Gew.-% aus dem thermoplastischen Polyester und zu 5 bis 40 Gew.-% aus dem thermoplastischen Polyurethan besteht, daß der Polyester mindestens 70 Mol-%, bezogen auf die Gesamtheit aller Polyesterbaugruppen, Baugruppen, die sich von aromatischen Dicarbonsäuren und von aliphatischen Diolen ableiten, und maximal 30 Mol-%, bezogen auf die Gesamtheit aller Polyesterbaugruppen, Dicarbonsäure-und Diol-Baugruppen, die von den aromatischen Baugruppen, die den überwiegenden Teil der Baugruppen bilden, verschieden sind, enthält, daß der Polyester einen Glaspunkt von 68 bis 82°C, einen Kristallisationspunkt von 135 bis 155°C und einen Schmelzpunkt im Bereich von 175°C bis 235°C aufweist und daß der Schmelzpunkt der Mischung des Polyesters und des Polyurethans zwischen 200 und 230°C, liegt.

Das Polymermaterial der erfindungsgemäßen, abriebfesten Polyestermischung besteht vorzugsweise zu 70 bis 90 Gew.-% aus dem thermoplastischen Polyester und vorzugsweise zu 10 bis 30 Gew.-% aus dem thermoplastischen Polyurethan.

Der thermoplastische Polyester der erfindungsgemäßen abriebfesten Polyestermischung hat einen Glaspunkt von vorzugsweise 72 bis 80°C und einen Kristallisationspunkt vorzugsweise von 140 bis 150°C.

Der Schmelzpunktsbereich der erfindungsgemäßen abriebfesten Polyestermischung, und die Temperaturbereiche des Glaspunktes, des Kristallisationspunktes und des Schmelzpunktes des in der erfindungsgemäßen abriebfesten Polyestermischung enthaltenen thermoplastischen Polyesters beziehen sich auf die Messung in einem Differential Scanning Calorimeter (DSC-Messung) bei einer Temperatursteigerungsrate von 10°C pro Minute.

Vorzugsweise weist der Polyester der erfindungsgemäßen abriebfesten Polyestermischung eine Schmelzviskosität, gemessen bei 245 ± 2°C und einem Schergefälle von 200 ± 5 s⁻¹ von 445 bis 482 Pa•s, vorzugsweise von 455 bis 475 Pa•s, insbesondere von 460 bis 468 Pa•s und bei bei der gleichen Temperatur und einem Schergefälle von 1200 ± 5 s⁻¹ von 245 bis 282 Pa•s, vorzugsweise von 250 bis 272, insbesondere von 255 bis 270 Pa•s auf.

Die thermoplastischen Polyester der erfindungsgemäßen abriebfesten Polyestermischung bestehen überwiegend, d.h. zu mindestens 70 Mol.-%, bezogen auf die Gesamtheit aller Polyesterbaugruppen, aus gängigen Baugruppen, die sich von aromatischen Dicarbonsäuren und von aliphatischen Diolen ableiten. Gängige aromatische Dicarbonsäurebaugruppen leiten sich von Benzoldicarbonsäuren, insbesondere der Terephthalsäure und der Isophthalsäure ab; gängige Diole haben 2-4 C-Atome, wobei das Ethylenglycol besonders geeignet ist. Die restlichen 30 Mol%, bezogen auf die Gesamtheit aller Polyesterbaugruppen, bauen sich dann aus Dicarbonsäureeinheiten und Dioleinheiten auf, die von den Baugruppen, die den überwiegenden Teil der Baugruppen bilden, verschieden sind, die als sogenannte Modifizierungsmittel wirken und die es dem Fachmann gestatten, die physikalischen und chemischen Eigenschaften der hergestellten Filamente gezielt zu beeinflussen.

Beispiele für solche Dicarbonsäureeinheiten sind Reste von aromatischen Dicarbonsäuren, die von den aromatischen Dicarbonsäure-Baugruppen, die den überwiegenden Teil der Dicarbonsäure-Baugruppen bilden, verschieden sind, oder Reste von araliphatischen Dicarbonsäuren mit einem oder mehreren, vorzugsweise einem oder zwei kondensierten oder nicht kondensierten aromatischen Kernen, beispielsweise der Isophthalsäure, 5-Sulfoisophthalsäure, 5-Sulfopropoxyisophthalsäure, Naphthalin-2,6-dicarbonsäure, Biphenyl-4,4'-dicarbonsäure, p-Phenylendiessigsäure, Diphenyloxid-4,4'-dicarbonsäure oder Diphenoxyalkan-dicarbonsäure, oder Reste von cyclischen oder acyclischen aliphatischen Dicarbonsäure wie z.B. trans-Hexahydro-terephthalsäure, 1,2-Cyclobutandicarbonsäure, Glutarsäure, Adipinsäure, Sebazinsäure. Beispiele für modifizierend wirkende Diolreste sind solche von verzweigten und/oder längerkettigen Diolen mit 3 bis 10, vorzugsweise 3 bis 6, C-Atomen, wie z.B. von 1,3-Propandiol, 1,4-Butandiol, 1,6-Hexandiol, 2,2-Dimethyl-propandiol oder 2-Ethyl-1,6-hexandiol, oder von cyclischen Diolen, beispielsweise von 1,4-Hydroxymethyl-cyclohexan, oder von Ethergruppen enthaltenden Diolen, wie z.B. von Di- oder Triethylenglycol oder, sofern in geringer Menge vorhanden, von Polyglycol mit einem Molgewicht von 500 - 2000.

Insbesondere sind als Bestandteile der erfindungsgemäßen abriebfesten Polyestermischung solche thermoplastischen Polyester bevorzugt, deren Polymerketten, bezogen auf die Gesamtheit aller Polyesterbaugruppen, aus

35 bis 47 Mol-% Baugruppen der Formel -CO-A¹-CO- (I)

3 bis 15 Mol-% Baugruppen der Formel -CO-A²-CO- (II)

35 bis 50 Mol-% Baugruppen der Formel -O-D¹-O- (III)

0 bis 15 Mol-% Baugruppen der Formel -O-D²-O- (IV)

aufgebaut sind, worin
- A¹: aromatische Reste mit 5 bis 12, vorzugsweise 6 bis 10 C-Atomen
- A²: von A¹ verschiedene aromatische oder araliphatische Reste mit 5 bis 16, vorzugsweise 6 bis 12 C-Atomen oder cyclische oder acyclische aliphatische Reste mit 2 bis 10 Kohlenstoffatomen, vorzugsweise 4 bis 8 Kohlenstoffatomen,
- D¹: Alkylen- oder Polymethylengruppen mit 2 bis 4 Kohlenstoffatomen oder Cycloalkan- oder Dimethylen-cycloalkangruppen mit 6 bis 10 C-Atomen,
- D²: von D¹ verschiedene Alkylen- oder Polymethylengruppen mit 3 bis 4 Kohlenstoffatomen oder Cycloalkan- oder Dimethylencycloalkangruppen mit 6 bis 10 C-Atomen oder geradkettige oder verzweigte Alkandiyl-Gruppen mit 4 bis 16, vorzugsweise 4 bis 8, C-Atomen oder Reste der Formel -(C₂H₄-O)ₘ-C₂H₄-, worin m eine ganze Zahl von 1 bis 40 bedeutet, wobei m = 1 oder 2 für Anteile bis zu 20 Mol.-% bevorzugt sind und Gruppen mit m = 10 bis 40 vorzugsweise nur in Anteilen von unter 5 Mol.-% vorhanden sind, bedeuten.

Zweckmäßigerweise haben die in der erfindungsgemäßen Polyestermischung enthaltenen Polyester eine relative Viskosität von 1,6 bis 2,2 , vorzugsweise von 1,8 bis 2,0 , gemessen in einer 1 gew.-%igen Lösung der Polyester in Dichloressigsäure bei 25°C.

Bevorzugter aromatischer Rest, für den A¹ steht, ist 1,4-Phenylen, bevorzugte aromatische Reste, für die A² steht, sind insbesondere 1,3-Phenylen aber auch 1,4-, 1,5-, 1,8-, 2,6- und 2,7-Naphthylen, 4,4'-Biphenylen, Furylen und Reste der Formel VI 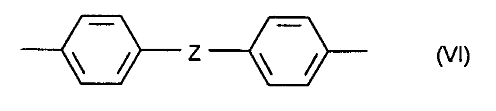 worin Z Polymethylen oder Alkylen mit 1 bis 4 Kohlenstoffatomen, -SO₂-, -COO-, -O- oder -S- bedeutet.

Die Reste, für die A¹ und A² stehen, können im Rahmen der gegebenen Definition alle gleich sein, oder sie können verschieden sein.
Insbesondere können die oben genannten, von A¹ repräsentierten Reste einzeln oder gemischt in der Polyesterkette vorliegen. Bevorzugt ist es, wenn A¹ von nur einem oder zwei Individuen aus der Gruppe der für A¹ angegebenen Reste gebildet wird. Eine eventuell gewünschte weitere Modifizierung der Polyesterkette erfolgt dann vorzugsweise durch andere Baugruppen im Rahmen der Definition, die für A² gegeben worden ist.

So können die aromatischen Reste A¹ beispielsweise alle 1,4-Phenylenreste sein oder sie können sich beispielsweise im Molverhältnis von 4:6 bis 6:4 aus 2,6-Naphylenresten und Biphenyl-4,4'-diyl-Resten zusammensetzen.
Bevorzugt sind Polyester, in denen A¹ 1,4-Phenylenreste sind und insbesondere solche, in denen auch A² für aromatische Reste steht.

Auch die Reste, für die D¹ und D² stehen, können im Rahmen der gegebenen Definition alle gleich sein, oder sie können verschieden sein.
Insbesondere können die oben genannten, von D¹ repräsentierten Reste einzeln oder gemischt in der Polyesterkette vorliegen. Bevorzugt ist es, wenn D¹ von nur einem oder zwei Individuen aus der Gruppe der für D¹ angegebenen Reste gebildet werden.
Eine eventuell gewünschte weitere Modifizierung der Polyesterkette erfolgt dann vorzugsweise durch andere Baugruppen im Rahmen der Definition, die für D² gegeben worden ist.
So können die Reste D¹ beispielsweise alle Ethylenreste sein oder sie können sich beispielsweise im Molverhältnis von 10:1 bis 1:10 aus Ethylen- und 1,4-Dimethylencyclohexan-Resten zusammensetzen.
Besonders bevorzugt sind Polyester, in denen D¹ ausschließlich Ethylen-Reste sind.

Besonders bevorzugt sind ferner Polyester in denen A¹ 1,4-Phenylen und A² 1,3-Phenylen bedeuten.

Weiterhin sind Polyester besonders bevorzugt, die 40 bis 47 Mol-% Baugruppen der Formel 1, 3 bis 10 Mol-% Baugruppen der Formel II, 48 bis 50 Mol-%, insbesondere 50 Mol-% Baugruppen der Formel III und 0 bis 2, insbesondere 0 Mol-% Baugruppen der Formel IV aufweisen.

Die Kerne der aromatischen und der araliphatischen Reste, für die A¹ und A² stehen, können ihrerseits noch einen oder zwei Substituenten tragen. In diesem Fall ist es jedoch bevorzugt, daß nur ein Anteil von bis zu 15 %, insbesondere von bis zu 7 % der vorhandenen aromatischen Reste substituiert ist. Vorzugsweise tragen die substituierten aromatischen Reste jeweils nur einen Substituenten. Besonders geeignete Substituenten sind Alkyl mit 1 bis 4 C-Atomen, Alkoxy mit 1 bis 4 C-Atomen, Chlor und die Sulfogruppe.

Reste, die sich von aliphatischen Dicarbonsäuren ableiten, und aromatische Reste, die gewinkelte Ketten liefern, beispielsweise Isophthalsäurereste, oder die sperrigere aromatische Kerne, wie den Naphthalinkern aufweisen, sowie die längerkettigen, für Y stehenden Baugruppen werden insbesondere dann in die Polyesterkette eingebaut, wenn eine weitere Modifizierung der Eigenschaften des Polyesters erwünscht ist.
Bevorzugt sind Polyester, die weniger als 7 % dieser modifizierend wirkenden Komponenten enthalten.

Das in der erfindungsgemäßen abriebfesten Polyestermischung enthaltene thermoplastische Polyurethan ist in erster Linie gekennzeichnet durch anwendungsbezogene physikalische Eigenschaften.
Vorzugsweise weist es einen Schermodul auf, der im Temperaturbereich von 20 bis 60°C einen Wert von 8 bis 80 MPa, vorzugsweise von 20 bis 50 MPa, hat, einen mechanischen Verlustfaktor tan(δ), der im Temperaturbereich von 20 bis 60°C einen Wert von 0,8·10⁻² bis 1,2·10⁻¹ hat, eine Shore-Härte A, gemessen nach DIN 53505, von 82 bis 100 und eine Shore-Härte D, gemessen nach DIN 53505, von 30 bis 60.
Ferner ist es bevorzugt, daß das thermolastische Polyurethan der erfindungsgemäßen abriebfesten Polyestermischung eine Zugfestigkeit, gemessen nach DIN 53504, von 32 bis 42 MPa, eine Bruchdehnung, gemessen nach DIN 53504, von 420 bis 520 % und eine Schlagzähigkeit, gemessen nach DIN 53515 von 32 bis 45 % aufweist.

Das thermoplastische Polyurethan der erfindungsgemäßen abriebfesten Polyestermischung entspricht der idealisierten Formel V, 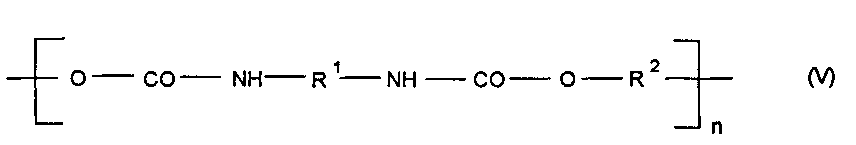 worin
- R¹: ein zweibindiger, aromatischer oder araliphatischer Rest mit 6 bis 18 C-Atomen mit einem ggf. substituierten aromatischen Ring oder mit zwei kondensierten oder nicht kondensierten, ggf. substituierten aromatischen Ringen ist,
- R²: eine Polyetherbaugruppe der Formel VI ist, 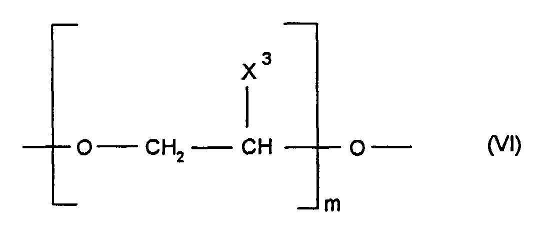 worin
X³ für Wasserstoff oder Methyl steht, und m eine Zahl von 10 bis 100, vorzugsweise von 10 bis 30 ist oder der Rest des Polytetrahydrofurans oder, vorzugsweise eine Polyesterbaugruppe der Formel VII 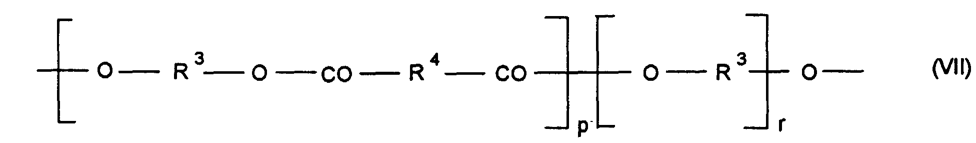 worin
R³ geradkettiges oder ggf. verzweigtes Alkan-diyl oder Oxa-alkan-diyl mit 2 bis 8, vorzugsweise 2 bis 6 C-Atomen, wie z.B. Ethylen, Propan-1,3-diyl, Butan-1,4-diyl, Hexan-1,6-diyl, 2-Ethylhexan-1,6-diyl, 2,2-Dimethylpropan-1,3-diyl oder die von Di-ethylenglycol oder Triethylenglycol sich ableitenden zweiwertigen Oxaalkan-diyl-Reste,
R⁴ Alkan-diyl mit 2 bis 6, vorzugsweise 2 bis 4 C-Atomen, Cycloalkan-diyl wie Cyclohexan-1,4 oder 1,3-diyl oder ein zweibindiger aromatischer Rest mit 6 bis 12 C-Atomen, vorzugsweise 6 bis 10 C-Atomen, insbesondere 1,3- oder 1,4-Phenylen,
p eine Zahl ist die so gewählt ist, daß der Rest R⁴ ein Molgewicht von 1000 bis 2000 hat (p = 5 bis 12, vorzugsweise 8 bis 11) und
q entweder 0 oder 1 bedeutet.

Für das in der erfindungsgemäßen abriebfesten Polyestermischung enthaltene Polyurethan ist oben eine "idealisierte" Formel angegeben worden. Das bedeutet, daß die Formel nicht streng die reale Struktur des Polyurethans wiedergibt. Die Polyurethane werden bekanntlich durch Umsetzung von Diisocyanaten rnit Hydroxylgruppen enthaltenden Polyethern oder Polyestern hergestellt. Wegen der großen Reaktionsfähigkeit der Diisocyanate können aber auch in untergeordnetem Umfang Nebenreaktionen eintreten, die zu Produkten führen, deren Struktur durch die angegebene Formel nicht beschrieben werden.

Dennoch hat die idealisierte Formel für den Fachmann den Wert einer völlig ausreichenden Beschreibung des eingesetzten Polyurethans, weil sie erkennen läßt, welche Ausgangsmaterialien zu dem in Rede stehenden Produkt vereinigt wurden. Er wird somit durch die Formel in die Lage versetzt, sich das in der erfindungsgemäßen abriebfesten Polyestermischung enthaltene thermoplastische Polyurethan herzustellen.

Vorzugsweise enthält die erfindungsgemäße abriebfeste Polyestermischung ein thermoplastisches Polyurethan der idealisierten Formel V, worin R¹ Phenylen, Naphthylen, oder eine Baugruppe der Formeln VIII oder IX ist, 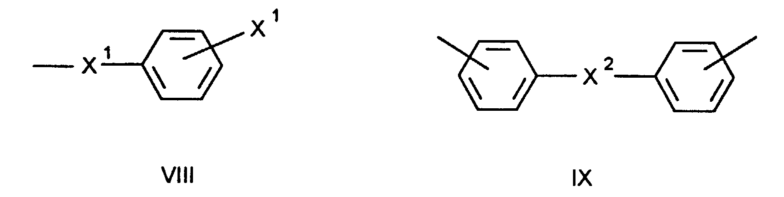 die ggf. Substituenten tragen können, worin
- X¹: ein zweibindiger aliphatischer Rest mft 1 bis 3 C-Atomen und
- X²: eine direkte Bindung, ein zweibindiger aliphatischer Rest mit 1 bis 3 C-Atomen, -CO-, -SO₂- oder -NH-CO-NH- ist.

Besonders bevorzugt sind solche erfindungsgemäßen abriebfesten Polyestermischungen, die ein thermoplastisches Polyurethan der idealisierten Formel V enthalten, worin R¹ eine Baugruppe der Formel X ist.

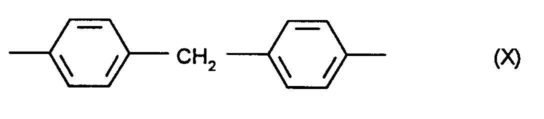

Die in dem thermoplastischen Polyurethan enthaltenen aromatischen Ringe können unsubstituiert sein oder einen oder zwei Substituenten aus der Gruppe -SO₃H oder -CH₃ tragen.

Einige thermoplastische Polyurethane, die die oben angegebenen Merkmale aufweisen sind im Handel erhältlich.
Ein Polyurethan, das sich gut als Bestandteil der erfindungsgemäßen abriebfesten Polyestermischung eignet ist beispielsweise das ®DESMOPAN VPKA 8392 der Firma BAYER AG.
Die erfindungsgemäße abriebfeste Polyestermischung kann bis zu 10 Gew.-% von nicht-polymeren Stoffen, wie Modifizierungszusätzen, Füllmitteln, Pigmenten, Farbstoffen, Antioxydantien, Hydrolyse-, Licht- und Temperatur-Stabilisatoren und/oder Verarbeitungshilfsmitteln enthalten.
Besonders bevorzugte erfindungsgemäße abriebfeste Polyestermischungen enthalten insbesondere bis zu 10 Gew.-%, vorzugsweise bis zu 5 Gew.-% Polyesterstabilisatoren, die den Polyesteranteil der Mischung gegen Hydrolyse und thermischen Abbau schützen.

Besonders Vorteilhaft als Stabilisatoren sind solche Verbindungen, die mit endständigen Carboxylgruppen des Polyesters zu nichtsauren Endgruppen reagieren können, wie beispielsweise Glycidylether, Ketenimine, Aziridine, Isocyanate. Besonders vorteilhaft als Stabilisatoren sind Carbodiimide und Polycarbodiimide, insbesondere wenn sie in Kombination miteinander eingesetzt werden.

Die erfindungsgemäßen abriebfesten Polyestermischungen stellen homogene Mischungen der Mischungskomponenten dar. "Homogen" im Sinne dieser Erfindung ist jedoch nicht auf lösungsänliche, d.h. molekulardisperse, Verteilungen beschränkt, sondern die Mischung kann auch aus einer gleichmäßigen Mischung der pulverförmigen Bestandteile bestehen oder aus einer gleichmäßigen Mischung von Pellets oder Chips aus den Mischungsbestandteilen bestehen.
Von Bedeutung ist lediglich, daß die Mischungen sich in einem Extruder zu einer Schmelze aufschmelzen lassen, die während des Extrudiervorgangs die gleich Zusammensetzung beibehält, so daß stets Extrudate eindeutig definierter Zusammensetzung entstehen.
Bei erfindungsgemäßen abriebfesten Polyestermischungen, die aus einer homogenen Mischung von Pulvern oder noch größeren Partikeln, wie z.B. Pellets, bestehen, befinden sich eventuell vorgesehene nichtpolymere Bestandteile der erfindungsgemäßen abriebfesten Polyestermischung in der Regel in den Partikeln des Polyesters und/oder des Polyurethans, vorzugsweise in den Polyester-Partikeln.

Die Herstellung der erfindungsgemäßen abriebfesten Polyestermischung erfolgt durch Mischen der oben beschriebenen thermoplastischen Polyester und Polyurethane in geeigneten bekannten Mischaggregaten, z.B. Mischtrommeln oder Knetern. Diese polymeren Bestandteile können in fester Form, beispielsweise als Pulver, Chips oder Pellets, vorliegen oder als Schmelzen. Es ist selbstverständlich auch möglich, einen pulverförmigen Bestandteil in eine Schmelze des anderen einzurühren. Als Mischaggregat wird ein solches verwendet, das der Aufgabe gerecht wird, d.h. das dem Aggregatzustand der zu mischenden Bestandteile angepaßt ist.

Sofern die Mischung unter Aufschmelzen der Bestandteile erfolgt, was bei guter Durchmischung der Schmelze zu einer besonders guten, bis zur molekulardispersen, Homogenisierung der erfindungsgemäßen abriebfesten Polyestermischung führt, kann durch Extrudieren und Pellettieren der Schmelze eine erfindungsgemäße abriebfeste Polyestermischung in Form einheitlicher Pellets oder Chips gewonnen werden.
Nicht-polymere Bestandteile werden in der Regel in eine oder beide der Polymerkomponenten, vorzugsweise in die Polyesterkomponente eingearbeitet. Eine besonders zweckmäßige Ausführungsform der Herstellung der erfindungsgemäßen abriebfesten Polyestermischung besteht darin, daß man Polymer-Komponenten - die ggf. vorhandene nichtpolymere Bestandteile enthalten - unmittelbar vor dem Extrudereinlauf miteinander im gewünschten Mengenverhältnis vereinigt. Die Homogenisierung erfolgt dann im Eingangs- und Mischbereich der Extruderschnecke. Das im Extruder gemischte und homogenisierte Material kann dann direkt zu den gewünschten Artikeln, vorzugsweise zu erfindungsgemäßen Monofilamenten extrudiert werden.

Ein weiterer Gegenstand der vorliegenden Erfindung sind Monofilamente bestehend aus der oben beschriebenen erfindungsgemäßen abriebfesten Polyestermischung. Diese Monofilameilte haben einen Titer von 70 bis 40000 dtex, vorzugsweise von 157 bis 2200 dtex, einen Anfangsmodul von 400 bis 800, vorzugsweise von 500 bis 700 cN/tex, eine feinheitsbezogene Höchstzugkraft von 15 bis 30, vorzugsweise von 20 bis 30 cN/tex, eine Höchstzugkraftdehnung von 50 bis 70, vorzugsweise von 60 bis 65 %, einen Trockenhitzeschrumpf, gemessen bei 180°C von 10 bis 40, vorzugsweise von 15 bis 20 %, wobei sie eine Schrumpfspannung von 0,1 bis 0,5 vorzugsweise 0,2 bis 0,3 cN/tex entwickeln und einen Kochschrumpf von 3 bis 10, vorzugsweise von 4 bis 7 %.

Die Monofilamente können mit verschiedenen Querschnittsformen, u.a. auch als Hohlfilamente, hergestellt werden. Bevorzugt ist der runde Querschnitt.

Diese Monofilamente können mit besonderem Vorteil zur Herstellung von Papiermaschinensieben eingesetzt werden.

Zur Herstellung der erfindungsgemäßen Monofilamente wird die erfindungsgemäße abriebfeste Polyestermischung unmittelbar vor dem Verspinnen getrocknet, vorzugsweise durch Erwärmen in einer trockenen Atmosphäre oder im Vakuum. Anschließend wird die erfindungsgemäße abriebfeste Polyestermischung in einem Extruder aufgeschmolzen und homogenisiert. Alternativ können, wie oben bereits ausgeführt, die thermoplastischen Polyester- und die Polyurethan-Komponenten der erfindungsgemäßen abriebfesten Polyestermischung auch getrennt vorgetrocknet und dem Extruder in dem gewünschten Mischungsverhältnis zugeführt weden.
Die im Extruder vollständig homogenisierte Schmelze wird in einem üblichen Spinnpack filtriert und durch eine Spinndüse bei einer Schmelzetemperatur von 210 bis 245, vorzugsweise von 210 bis 235°C ausgesponnen. Der ausgesponnene Schmelzefaden wird in einem Spinnbad (z.B. Wasser von ca. 70°C) abgekühlt und mit einer Geschwindigkeit aufgewickelt oder abgezogen, die größer ist als die Spritzgeschwindigkeit der Copolyesterschmelze, sodaß sich ein Spinnverzug von 1:2 bis 1:4, vorzugsweise 1:2,5 bis 1:3,5, ergibt.

Die Spritzgeschwindigkeit wird zweckmäßigerweise so eingestellt, daß im Interesse einer wirtschaftlichen Herstellung der erfindungsgemäßen Monofilamente mit einer Spinnabzugsgeschwindigkeit von 5 bis 30, vorzugsweise 15 bis 25 m pro Minute gearbeitet werden kann.

Von besonderer Bedeutung für die Herstellung der erfindungsgemäßen Monofilamente ist die Einhaltung des oben genannten Bereichs der Schmelzetemperatur. Bei dieser Temperatur werden erfindungsgemäße Filamente mit optimalen anwendungstechnischen Eigenschaften erhalten. Außerdem tritt ist in diesem Temperaturbereich keine Belästigung durch abgespaltenes Diisocyanat ein. Es tritt auch kein nenneswerter, unseres Erachtens auf die Abspaltung von Diisocyanat aus dem Polyurethan-Anteil der erfindungsgemäßen abriebfesten Polyestermischung zurückzuführender, Gewichtsverlust der erfindungsgemäßen abriebfesten Polyestermischung beim Verspinnen ein.

Eine Erhöhung der Schmelzetemperatur führt dagegen zu einem deutlichen Gewichtsverlust der erfindungsgemäßen abriebfesten Polyestermischung infolge einer nicht mehr tolerierbaren Abspaltung von Diisocyanaten.
Thermogravimetrische Untersuchungen an der erfindungsgemäßen abriebfesten Polyestermischung haben ergeben, daß sich im Temperaturbereich bis maximal 250°C, in dem die erfindungsgemäße Polyestermischung versponnen wird, ein Substanzveriust von nur ca. 0,3 Gew.-% (ohne Feuchtigkeitsveriust) ergibt, während bei der Spinntemperatur der bekannten Polyethylenterephthalat/Polyurethanmischungen (>290°C) ein Substanzverlust von über 3 Gew.-% zu beobachten ist.

Der so hergestellte Spinnfaden wird anschließend einer Nachverstreckung, vorzugsweise in mehreren Stufen, insbesondere einer zwei- oder dreistufigen Nachverstreckung, mit einem Gesamt-Verstreckverhältnis von 1:4 bis 1:8, vorzugsweise 1:5 bis 1:7, unterworfen, und anschließend bei Temperaturen von 160 bis 240°C, vorzugsweise von 170 bis 210°C, thermofixiert, wobei bei konstanter Länge oder unter Zulassung von 10 bis 30 %, vorzugsweise 15 bis 25 % Schrumpf gearbeitet werden kann.

Die so erhaltenen erfindungsgemäßen Copolyester-Monofilamente haben eine hervorragende Abriebfestigkeit. So verliert ein erfindungsgemäßes Monofilament aus der erfindungsgemäßen abriebfesten Polyestermischung bei dem unten beschriebenen Abriebtest nur einen Bruchteil der Masse, die ein herkömmliches Polyestergarn für industrielle Anwendung einen unter den gleichen Testbedingungen verliert.

Die Neigung zur Bildung von Abrieb wurde wie folgt gemessen:
Jeweils 10 000 m Monofil wurden mit 100 m/min durch eine gewogene Prüfeinrichtung, bestehend aus einem Gitter aus 20 im Abstand von 2 mm stehenden Metalldrähten mit einem Drahtdurchmesser von 0,5 mm und einem unterhalb des Gitters angebrachten mit dem Gitter fest verbundenen Auffangschälchen für Abrieb gezogen. Nach der Passage des Monofilaments wird die Prüfeinrichtung (bestehend aus Gitter + Auffangschälchen) erneut gewogen. Die festzustellende Gewichtszunahme der Prüfeinrichtung ist durch Abrieb bedingt und ein Maß für die Abriebfestigkeit.

Ein weiterer Gegenstand der vorliegenden Erfindung sind Papiermaschinensiebe, die aus den erfindungsgemäßen abriebfesten Monofilamenten bestehen oder diese als abriebfeste Komponente enthalten, sowie die Verwendung dieser Monofilamente bei der Herstellung oder zur Herstellung von Papiermaschinensieben, insbesondere von Papiermaschinenlangsieben.
Ein solches Formiersieb in der Papiermaschine hat in der Regel einen ein- bis dreilagigen Aufbau und weist ein Flächengewicht von 100 bis 800, vorzugsweise 200 bis 600 g/m² auf. Dabei werden Monofilamente im Titerbereich vorzugsweise von 157 bis 2200 dtex eingesetzt. Die erfindungsgemäß eingesetzten Monofilamente haben einen Elastizitätsmodul von über 4 N/tex, und im Allgemeinen eine feinheitsbezogene Festigkeit von 20 bis 30 cN/tex, eine Bruchdehnung von 50 bis 70 % und einen Heißluftschrumpf bei 180°C von 15 bis 40 %.

Die Monofilamente werden auf herkömmlichen Breitwebmaschinen mit den auch beim Verweben von Polyethylenterephthalat üblichen Maschinenparametern zu den Papiermaschinensieben verwebt. Beispielsweise wird eine gute Siebware erhalten durch Verweben von Monofilen mit 0,17 mm Durchmesser in der Kette mit Oberschüssen von 0,2 mm und Unterschüssen von 0,22 mm. Das Gewebe hat sehr gute Dimensionsstabilität und Abriebfestigkeit.

Papiermaschinesiebe mit überlegenen Abriebeigenschaften können aber bereits dann erhalten werden, wenn die erfindungsgemäßen abriebfesten Monofilamente nur zu einem wirksamen Anteil mitverwebt werden, wobei zweckmäßigerweise so gearbeitet wird, daß in den Flächen des Siebes, an denen eine besonders hohe Reibebeanspruchung auftritt, die erfindungsgemäßen Filamente angereichert sind. Das erhaltene Gewebe wird in der Regel auf einer entsprechend dimensionierten Thermofixiereinrichtung nachbehandelt um die im Einzelfall erwünschten spezifischen Siebeigenschaften einzustellen.

Das in dieser Weise aus erfindungsgemäßen Monofilamenten oder unter Mitverwendung von erfindungsgemäßen Monofilamenten produzierte Papiermaschinensieb-Gewebe hat gegenüber einem aus herkömmlichen Polyethylenterephthalat-Monofilamenten hergestellten Material eine bessere Abriebfestigkeit und dadurch eine wesentlich längere Standzeit in der Papiermaschine.

Die folgenden Ausführungsbeispiele veranschaulichen die Herstellung erfindungsgemäßer Monofilamente und deren im Vergleich zu herkömmlichen Polyethylenterephalat-Monofilamenten erheblich verbessertes Abriebverhalten.

### Beispiel 1

Eine erfindungsgemäße abriebfeste Polyestermischung wird hergestellt durch Mischen von 85 Gew.-Teilen eines Polyethylen-terephthalat-isophthalats mit einem Anteil von 10 Mol.-% Isophthalsäure in der Polyesterkette und einem Schmelzpunkt von 229°C mit 15 Gew.-Teilen ®DESMOPAN VPKA 8392.
Die Mischung wird einem Extruder zugeführt, aufgeschmolzen und homogenisiert. Die Massetemperatur am Extruderausgang beträgt 225°C. Mit Hilfe einer Spinnpumpe wird diese Schmelze bei einem Druck von 220 bar durch Düsenlöcher mit 0.6 mm Durchmesser ausgesponnen und in einem Kühlbad mit 70°C warmen Wasser verfestigt. Dies so erhaltenen Monofilamente (Drähte) werden dann zweistufig vorstreckt, wobei in der ersten Stufe ein Verstreckverhältnis (W₁) von 5.8, und in der zweiten Stufe (W₂) von 1.1 zur Anwendung gebracht wird. Abschließend wird das Monofilament unter Zulassung von 21 % Schrumpf bei 200°C fixiert.
Die aufgewickelten Monofilamente haben einen Durchmesser von 0.2 mm, eine Reißfestigkeit von 23 cN/tex bei einer Reißdehnung von 65 %, und einen Restschrumpf bei 180°C von 15 % (Schrumpfkraft dabei 12 cN).

### Beispiel 2

Ein Gemisch von 70 Gew.-Teilen von Schnitzeln des im Beispiel 1 eingesetzten Isophthalsäure modifizierten Polyethylenterephthalats und 30 Gew.-Teilen Schnitzeln von ®DESMOPAN VPKA 8392 wird im Extruder aufgeschmolzen, so daß eine 230°C heiße Schmelze entsteht. Eine Spinnpumpe drückt diese Schmelze durch 0.8 mm große Düsenlöcher. Die ersponnenen Monofile werden in 70°C warmen Wasser abgekühlt und anschließend zweistufig vorstreckt, wobei W₁ = 6.1 und W₂ = 1.2 gewählt wird. Die Fixierung erfolgt bei 180°C unter Zulassung von 21 % Schrumpf. Das fertige Monofilament hat einen Durchmesser von 0.2 mm. Die Reißfestigkeit beträgt 25 cN/tex bei einer Reißdehnung von 60 %. Der Restschrumpf bei 180°C beträgt 39 %, die Schrumpfkraft dabei 10 cN.

Die gemäß den Beispielen 1 und 2 hergestellten erfindungsgemäßen Monofilamente wurden im Vergleich zu einem gleichtitrigen Monofilament aus dem in den Beispielen verwendeten Polyester, (ohne Polyurethan-Zusatz) nach der oben beschriebenen Methode auf Abriebfestigkeit geprüft.
Dabei ergaben sich die in der folgenden Tabelle angegebenen Werte.

**Tabelle**

| | 0 % TPU ¹⁾ | 15 % TPU ¹⁾ | 30 % TPU ¹⁾ |
|---|---|---|---|
| | Kontrolle | Beispiel 1 | Beispiel 2 |
| Gewichtszunahme der Meßeinrichtung = Abrieb [mg] | 0,7 | 0,2 | < 0,1 |

| | | | |
|---|---|---|---|
| 1) TPU = Thermoplastisches Urethan | | | |

## Patentansprüche

1. Abriebfeste Polyestermischung mit erhöhter Verarbeitungssicherheit aus einem thermoplastischen Polyester, einem thermoplastischen Polyurethan und gegebenenfalls üblichen nicht-polymeren Zusätzen, dadurch gekennzeichnet, daß das Polymermaterial der Polyestermischung zu 60 bis 95 Gew.-% aus dem thermoplastischen Polyester und zu 5 bis 40 Gew.-% aus dem thermoplastischen Polyurethan besteht, daß der Polyester mindestens 70 Mol-%, bezogen auf die Gesamtheit aller Polyesterbaugruppen, Baugruppen, die sich von aromatischen Dicarbonsäuren und von aliphatischen Diolen ableiten, und maximal 30 Mol-%, bezogen auf die Gesamtheit aller Polyesterbaugruppen, Dicarbonsäure-und Diol-Baugruppen, die von den Baugruppen, die den überwiegenden Teil der Baugruppen bilden, verschieden sind, enthält, daß der Polyester einen Glaspunkt von 68 bis 82°C, einen Kristallisationspunkt von 135 bis 155°C und einen Schmelzpunkt im Bereich von 175°C bis 235°C aufweist und daß der Schmelzpunkt der Mischung des Polyesters und des Polyurethans zwischen 200 und 230°C liegt.

2. Abriebfeste Polyestermischung gemäß Anspruch 1, dadurch gekennzeichnet, daß die Polyestermischung bis zu 10 Gew.-% von nicht-polymeren Stoffen, wie Modifizierungszusätzen, Füllmitteln, Pigmenten, Farbstoffen, Antioxydantien, Hydrolyse-, Licht- und Temperatur-Stabilisatoren und/oder Verarbeitungshilfsmitteln enthält.

3. Abriebfeste Polyestermischung gemäß mindestens einem der Ansprüche 1 und 2, dadurch gekennzeichnet, daß das Polymermaterial der Polyestermischung zu 70 bis 90 Gew.-% aus dem thermoplastischen Polyester und zu 10 bis 30 Gew.-% aus dem thermoplastischen Polyurethan besteht.

4. Abriebfeste Polyestermischung gemäß mindestens einem der Ansprüche 1 bis 3, dadurch gekennzeichnet, daß der Polyester einen Glaspunkt von 72 bis 80°C, einen Kristallisationspunkt von 140 bis 150°C, und einen Schmelzpunkt im Bereich von 175°C bis 235°C aufweist.

5. Abriebfeste Polyestermischung gemäß mindestens einem der Ansprüche 1 bis 4, dadurch gekennzeichnet, daß der Polyester eine Schmelzviskosität, gemessen bei 245 ± 2°C und einem Schergefälle von 200 ± 5 s⁻ⁱ von 445 bis 482 Pa•s, vorzugsweise von 455 bis 475 Pa•s, insbesondere von 460 bis 468 Pa.s und bei bei der gleichen Temperatur und einem Schergefälle von 1200 ± 5s⁻¹ von 245 bis 282 Pa•s, vorzugsweise von 250 bis 272, insbesondere von 255 bis 270 Pa•s aufweist.

6. Abriebfeste Polyestermischung gemäß mindestens einem der Ansprüche 1 bis 5, dadurch gekennzeichnet, daß der Polyester maximal 30 Mol.-%, bezogen auf die Gesamtheit aller Polyesterbaugruppen, Polyesterbaugruppen enthält aus aromatischen Dicarbonsäure-Baugruppen, die von den aromatischen Dicarbonsäure-Baugruppen, die den überwiegenden Teil der Dicarbonsäure-Baugruppen bilden, verschieden sind oder aus Resten von araliphatischen Dicarbonsäuren mit einem oder mehreren, vorzugsweise einem oder zwei kondensierten oder nicht kondensierten aromatischen Kernen, oder aus cyclischen oder acyclischen aliphatischen Dicarbonsäuren mit 4 bis 12 C-Atomen, und aus Diol-Baugruppen, die sich von verzweigten und/oder längerkettigen Diolen mit 3 bis 10, vorzugsweise 3 bis 6, C-Atomen, oder von cyclischen Diolen, oder von Ethergruppen enthaltenden Diolen, oder von Polyglycol mit einem Molgewicht von 500 - 2000 ableiten, wobei von Polyglycol abgeleitete Diol-Baugruppen nur in einer Menge von unter 5 Mol-% vorhanden sind.

7. Abriebfeste Polyestermischung gemäß mindestens einem der Ansprüche 1 bis 6, dadurch gekennzeichnet, daß der Polyester, bezogen auf die Gesamtheit aller Polyesterbaugruppen, aus
35 bis 47 Mol-% Baugruppen der Formel -CO-A¹-CO- (I)
3 bis 15 Mol-% Baugruppen der Formel -CO-A²-CO- (II)
35 bis 50 Mol-% Baugruppen der Formel -O-D¹-O- (III)
0 bis 15 Mol-% Baugruppen der Formel -O-D²-O- (IV)
aufgebaut ist, worin
A¹ aromatische Reste mit 5 bis 12, vorzugsweise 6 bis 10 C-Atomen
A² von A¹ verschiedene aromatische Reste oder araliphatische Reste mit 5 bis 16, vorzugsweise 6 bis 12 C-Atomen oder aliphatische Reste mit 4 bis 10 Kohlenstoffatomen, vorzugsweise 4 bis 8 Kohlenstoffatomen,
D¹ Alkylen- oder Polymethylengruppen mit 2 bis 4 Kohlenstoffatomen oder Cycloalkan- oder Dimethylencycloalkangruppen mit 6 bis 10 C-Atomen,
D² von D¹ verschiedene Alkylen- oder Polymethylengruppen mit 3 bis 4 Kohlenstoffatomen oder Cycloalkan- oder Dimethylencycloalkangruppen mit 6 bis 10 C-Atomen oder geradkettige oder verzweigte Alkandiyl-Gruppen mit 4 bis 16, vorzugsweise 4 bis 8, C-Atomen oder Reste der Formeln -(C₂H₄-O)ₘ-C₂H₄- worin m eine ganze Zahl von 1 bis 40 bedeutet, wobei m = 1 oder 2 für Anteile bis zu 20 Mol.-% bevorzugt sind und Gruppen mit m = 10 bis 40 vorzugsweise nur in Anteilen von unter 5 Mol.-% vorhanden sind, bedeuten.

8. Abriebfeste Polyestermischung gemäß mindestens einem der Ansprüche 1 bis 7, dadurch gekennzeichnet, daß die in den erfindungsgemäßen Polyestermischungen enthaltenen Polyester eine relative Viskosität von 1,6 bis 2,2 , vorzugsweise von 1,8 bis 2,0 hat, gemessen in einer 1 gew.-%igen Lösung der Polyester in Dichloressigsäure bei 25°C.

9. Abriebfeste Polyestermischung gemäß mindestens einem der Ansprüche 1 bis 8, dadurch gekennzeichnet, daß das Polyurethan einen Schermodul aufweist, der im Temperaturbereich von 20 bis 60°C einen Wert von 8 bis 80 MPa, vorzugsweise von 20 bis 50 MPa, hat, einen mechanischen Verlustfaktor tan(δ) aufweist, der im Temperaturbereich von 20 bis 60°C einen Wert von 0,8•10⁻² bis 1,2•10^{-l} hat, eine Shore-Härte A, gemessen nach DIN 53505, von 82 bis 100, eine Shore-Härte D, gemessen nach DIN 53505, von 30 bis 60, eine Zugfestigkeit, gemessen nach DIN 53504, von 32 bis 42 Mpa, eine Bruchdehnung, gemessen nach DIN 53504, von 420 bis 520 % und eine Schlagzähigkeit, gemessen nach DIN 53515 von 32 bis 45 % aufweist.

10. Abriebfeste Polyestermischung gemäß mindestens einem der Ansprüche 1 bis 9, dadurch gekennzeichnet, daß das thermoplastische Polyurethan der idealisierten Formel V entspricht, 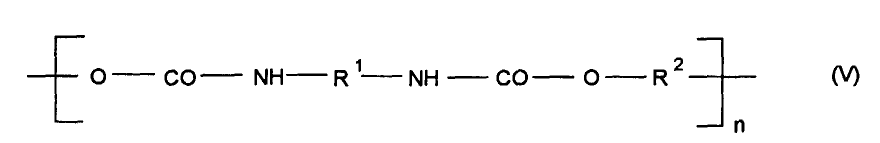 worin
R¹ ein zweibindiger, aromatischer oder araliphatischer Rest mit 6 bis 18 C-Atomen mit einem ggf. substituierten aromatischen Ring oder mit zwei kondensierten oder nicht kondensierten, ggf. substituierten aromatischen Ringen ist,
R² eine Polyetherbaugruppe der Formel VI ist, 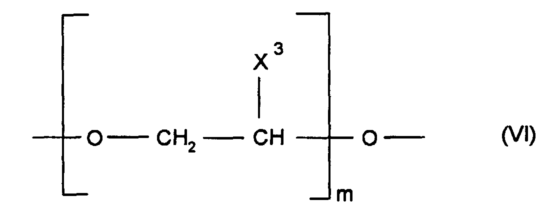
worin
X³ für Wasserstoff oder Methyl steht, und
m eine Zahl von 10 bis 100, vorzugsweise von 10 bis 30 ist oder der Rest des Poly-tetrahydrofurans oder, vorzugsweise eine Polyesterbaugruppe der Formel VII 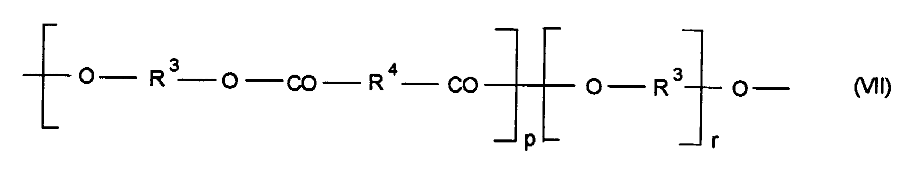 worin
R³ geradkettiges oder ggf. verzweigtes Alkan-diyl oder Oxa-alkan-diyl mit 2 bis 8, vorzugsweise 2 bis 6 C-Atomen, wie z.B. Ethylen, Propan-1,3-diyl, Butan-1,4-diyl, Hexan-1,6-diyl, 2-Ethylhexan-1 ,6-diyl, 2,2-Dimethylpropan-1,3-diyl oder die von Di-ethylenglycol oder Triethylenglycol sich ableitenden zweiwertigen Oxaalkan-diyl-Reste,
R⁴ Alkan-diyl mit 2 bis 6, vorzugsweise 2 bis 4 C-Atomen, Cycloalkan-diyl wie Cyclohexan-1,4 oder 1,3-diyl oder ein zweibindiger aromatischer Rest mit 6 bis 12 C-Atomen, vorzugsweise 6 bis 10 C-Atomen, insbesondere 1,3- oder 1,4-Phenylen,
p eine Zahl ist die so gewählt ist, daß der Rest R⁴ ein Molgewicht von 1000 bis 2000 hat (p = 5 bis 12, vorzugsweise 8 bis 11) und q entweder 0 oder 1 bedeutet.

11. Abriebfeste Polyestermischung gemäß mindestens einem der Ansprüche 1 bis 8, dadurch gekennzeichnet, daß das thermoplastische Polyurethan der idealisierten Formel V entspricht, worin R¹ Phenylen, Naphthylen, oder eine Baugruppe der Formeln VIII oder IX ist, 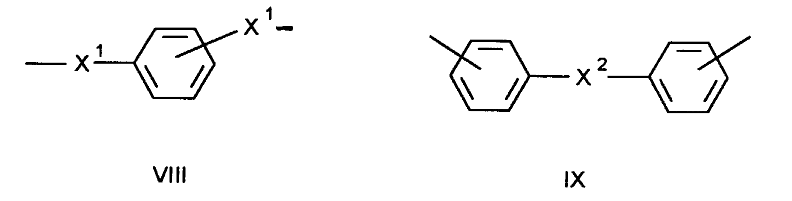 die ggf. Substituenten tragen können, worin
X¹ ein zweibindiger aliphatischer Rest mit 1 bis 3 C-Atomen und
X² eine direkte Bindung, ein zweibindiger aliphatischer Rest mit 1 bis 3 C-Atomen, -CO-, -SO₂- oder -NH-CO-NH- ist.

12. Abriebfeste Polyestermischung gemäß mindestens einem der Ansprüche 1 bis 8, dadurch gekennzeichnet, daß das thermoplastische Polyurethan der idealisierten Formel V entspricht, worin R¹ eine Baugruppe der Formel X 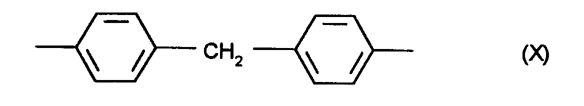 ist.

13. Abriebfeste Polyestermischung gemäß mindestens einem der Ansprüche 1 bis 8, dadurch gekennzeichnet, daß das thermoplastische Polyurethan der idealisierten Formel V entspricht, wobei die darin enthaltenen aromatischen Ringe unsubstituiert sind oder einen oder zwei Substituenten aus der Gruppe -SO₃H oder -CH, tragen.

14. Abriebfeste Monofilamente mit erhöhter Verarbeitungssicherheit, dadurch gekennzeichnet, daß sie aus einer Polyestermischung des Anspruchs 1 bestehen und einen Anfangsmodul bei 25°C von größer als 4 N/tex aufweisen.

15. Abriebfestes Monofilament gemäß Anspruch 14, dadurch gekennzeichnet, daß es eine feinheitsbezogene Höchstzugkraft von 20 bis 30 cN/tex und eine Höchstzugkraftdehnung von 50 bis 70 % aufweist.

16. Abriebfestes Monofilament gemäß mindestens einem der Ansprüche 14 und 15, dadurch gekennzeichnet, daß es einen Trockenhitzeschrumpf, gemessen bei 180°C, von 15 bis 40 % und einen Kochschrumpf von 3 bis 10 % aufweist.

17. Verfahren zur Herstellung der abriebfesten Polyestermischung des Anspruchs 1, dadurch gekennzeichnet, daß man die Polymer-Komponenten - die ggf. vorhandene nichtpolymere Bestandteile enthalten - unmittelbar vor dem Extrudereinlauf miteinander im gewünschten Mengenverhältnis vereinigt und die Homogenisierung im Eingangs- und Mischbereich der Extruderschnecke durchführt.

18. Verfahren zur Herstellung der Monofilamente des Anspruchs 14, dadurch gekennzeichnet, daß eine abriebfeste Polyestermischung des Anspruchs 1 in einem Extruder aufgeschmolzen, in einem üblichen Spinnpack filtriert und bei einer Schmelzetemperatur von 210 bis 245°C durch eine Spinndüse mit einem Spinnverzug von 1:2 bis 1:4 ausgesponnen, in einem Spinnbad abgekühlt und mit einer Geschwindigkeit aufgewickelt oder abgezogen wird, die größer ist als die Spritzgeschwindigkeit der Copolyesterschmelze, der so hergestellte Spinnfaden anschließend einer Nachverstreckung im Gesamt-Verstreckverhältnis von 1:4 bis 1:8 unterworfen, und anschließend bei Temperaturen von 160 bis 240°C, bei konstanter Länge oder unter Zulassung von 10 bis 30 % Schrumpf thermofixiert wird.

19. Verfahren gemäß Anspruch 18, dadurch gekennzeichnet, daß bei einer Schmelztemperatur im Bereich von 210 bis 235°C gesponnen wird.

20. Verfahren gemäß mindestens einem der Ansprüche 18 und 19, dadurch gekennzeichnet, daß die Monofilamente mit einer Spinnabzugsgeschwindigkeit von 5 bis 30 m pro Minute abgezogen werden.

21. Verwendung der abriebfesten Monofilamente des Anspruchs 14 bei der Herstellung oder zur Herstellung von Papiermaschinensieben.

22. Papiermaschinensieb, dadurch gekennzeichnet, daß es Monofilamenten enthält, bestehend aus einer abriebfesten Polyestermischung des Anspruchs 1.

## Claims

1. Abrasion-resistant polyester mixture with enhanced safety in processing from a thermoplastic polyester, a thermoplastic polyurethane and possibly conventional non-polymeric additives, characterised in that the polymer material of the polyester mixture consists up to 60 to 95% by weight of the thermoplastic polyester and up to 5 to 40% by weight of the thermoplastic polyurethane and in that the polyester contains at least 70 mole%, in relation to the totality of all polyester components, of components which are derived from aromatic dicarboxylic acids and aliphatic diols and a maximum of 30 mole% in relation to the totality of all polyester components, dicarboxylic acid and diol components which differ from the components which form the predominant share of the components and in that the polyester has a glazing point of 68 to 82°C, a crystallizing point of 135 to 155°C and a melting point in the range from 175°C to 235°C and in that the melting point of the mixture of the polyester and of the polyurethane is between 200 and 230°C.

2. Abrasion-resistant polyester mixture according to Claim 1, characterised in that the polyester mixture contains up to 10% by weight non-polymeric substances such as modifying additives, fillers, pigments, colourings, anti-oxidants, hydrolysis, light and temperature stabilizers and/or processing aids.

3. Abrasion-resistant polyester mixture according to at least one of Claims 1 and 2, characterised in that the polymer material of the polyester mixture consists of up to 70 to 90% by weight of the thermoplastic polyester and up to 10 to 30% by weight of the thermoplastic polyurethane.

4. Abrasion-resistant polyester mixture according to at least one of Claims 1 to 3, characterised in that the polyester has a glazing point of 72 to 80°C, a crystallizing point of 140 to 150°C and a melting point in the range from 175 to 235°C.

5. Abrasion-resistant polyester mixture according to at least one of Claims 1 to 4, characterised in that the polyester has a melting viscosity, measured at 245±2°C and a shear gradient of 200±5s⁻ⁱ of 445 to 482 Pa.s, preferably 455 to 475 Pa•s and in particular 460 to 468 Pa•s and, at the same temperature and a shear gradient of 1200±5s⁻¹ of 245 to 282 Pa•s, preferably 250 to 272 and in particular of 255 to 270 Pa•s.

6. Abrasion-resistant polyester mixture according to at least one of Claims 1 to 5, characterised in that the polyester contains a maximum of 30 mole%, in relation to the totality of all polyester components, of polyester components of aromatic dicarboxylic components which differ from the aromatic dicarboxylic components from the predominant share of the dicarboxylic components or from radicals of araliphatic dicarboxylic acids with one or more and preferably one or two condensed or non-condensed aromatic nuclei, or from cyclic or acyclic aliphatic dicarboxylic acids with 4 to 12 C-atoms and from diol components which are derived from branched and/or long-chain diols with 3 to 10, preferably 3 to 6, C-atoms or from diols containing ether groups or from polyglycol with a molecular weight of 500 to 2000, whereby diol components derived from polyglycol are only present in a quantity of less than 5 mole%.

7. Abrasion-resistant polyester mixture according to at least one of Claims 1 to 6, characterised in that, in relation to the totality of all polyester components, the polyester consists of 35 to 47 mole% components to the formula
-CO-A¹-CO- (I)
3 to 15 mole% components to formula -CO-A²-CO- (II)
35 to 50 mole% components to formula -O-D¹-O- (III)
0 to 15 mole% components to formula -O-D²-O- (IV)
in which
A¹ denotes aromatic radicals with 5 to 12, preferably 6 to 10 C-atoms
A² denotes various aromatic radicals or araliphatic radicals different from A¹ and with 5 to 16, preferably 6 to 12 C-atoms or aliphatic radicals with 4 to 10 carbon atoms, preferably 4 to 8 carbon atoms,
D¹ denotes alkylene or polymethylene groups with 2 to 4 carbon atoms or cycloalkane or dimethylene cycloalkane groups with 6 to 10 C-atoms,
D² denotes alkylene or polymethylene groups different from D¹ and with 3 to 4 carbon atoms or cycloalkane or dimethylene cycloalkane groups with 6 to 10 C-atoms or straight-chain or branched alkanediyl groups with 4 to 16, preferably 4 to 8, C-atoms or radicals to the formulae-(C₂H₄-0)m-C₂H₄- in which m means an integer from 1 to 40, whereby m = 1 or 2 for fractions up to 20 mole% are preferred and groups with m = 10 to 40 are preferably only present in fractions of less than 5 mole%.

8. Abrasion-resistant polyester mixture according to at least one of Claims 1 to 7, characterised in that the polyesters contained in the polyester mixtures according to the invention have a relative viscosity of 1.6 to 2.2, preferably 1.8 to 2.0, measured in a 1% by weight solution of the polyesters in dichloroacetic acid at 25°C.

9. Abrasion-resistant polyester mixture according to at least one of Claims 1 to 8, characterised in that the polyurethane has a shear modulus which in the temperature range from 20 to 60°C displays a level of 8 to 80 MPa, preferably 20 to 50 MPa and a mechanical loss factor tan(δ) which has a level of 0.8•10⁻² to 1.2•10⁻¹ in the temperature range from 20 to 60°C, a Shore hardness A of 82 to 100 when measured according to DIN 53505, a Shore hardness D of 30 to 60 when measured according to DIN 53505, a tensile strength of 32 to 42 MPa measured to DIN 53504, a rupture elongation of 420 to 520% when measured to DIN 53504 and an impact strength of 32 to 45% when measured according to DIN 53515.

10. Abrasion-resistant polyester mixture according to at least one of Claims 1 to 9, characterised in that the thermoplastic polyurethane corresponds to the idealized formulae 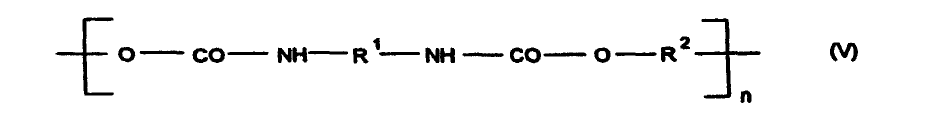 in which
R¹ is a bivalent aromatic or araliphatic radical with 6 to 18 C-atoms with a possibly substituted aromatic ring or with two condensed or non-condensed possibly substituted aromatic rings,
R² is a polyether component to formula VI 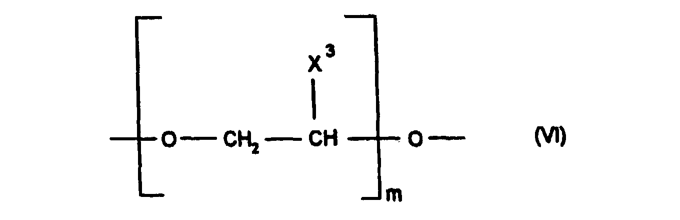
in which
X³ stands for hydrogen or methyl and
m is a number from 10 to 100, preferably from 10 to 30 or the radical of the polytetrahydrofurane or preferably a polyester component to formula VII 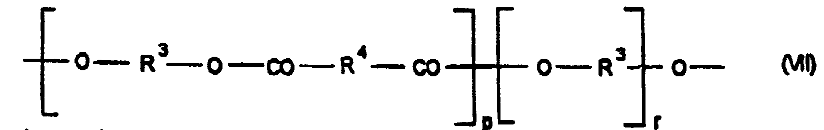
in which
R³ denotes straight-chain or possibly branched alkane-diyl or oxa-alkane-diyl with 2 to 8, preferably 2 to 6 C-atoms, such as for example ethylene, propane-1,3-diyl, butane-1,4-diyl, hexane-1,6-diyl, 2-ethylhexane-1,6-diyl, 2,2-dimethylpropane-1,3-diyl or the bivalent oxaalkane-diyl-radicals derived from di-ethylene glycol or triethylene glycol,
R⁴ denotes alkane-diyl with 2 to 6, preferably 2 to 4 C-atoms, cycloalkane-diyl such has cyclohexane-1,4 or 1,3-diyl or a bivalent aromatic radical with 6 to 12 C-atoms, preferably 6 to 10 C-atoms, particularly 1,3 or 1,4 phenylene,
P is a number which is so chosen that the radical R⁴ has a molecular weight of 1000 to 2000 (p = 5 to 12, preferably 8 to 11) and q means either 0 or 1.

11. Abrasion-resistant polyester mixture according to at least one of Claims 1 to 8, characterised in that the thermoplastic polyurethane corresponds to the idealized formula V in which R¹ denotes phenylene, naphthylene or a component to formulae VIII or IX 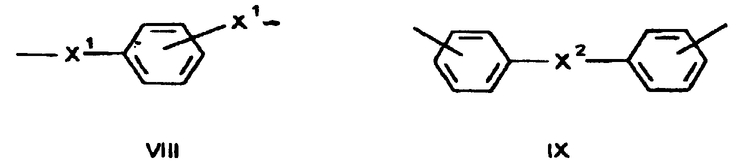 which may possibly contain substituents in which
X¹ is a bivalent aliphatic radical with 1 to 3 C-atoms and
X² is a direct bond, a bivalent aliphatic radical with 1 to 3 C-atoms, -CO-, -SO₂- or -NH-CO-NH-.

12. Abrasion-resistant polyester mixture according to at least one of Claims 1 to 8, characterised in that the thermoplastic polyurethane corresponds to the idealized formulae V in which R¹ is a component to formula X

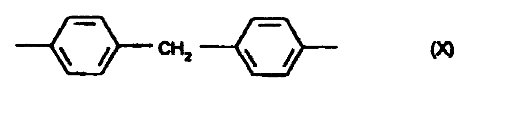

13. Abrasion-resistant polyester mixture according to at least one of Claims 1 to 8, characterised in that the thermoplastic polyurethane corresponds to the idealized formula V, whereby the aromatic rings contained therein are unsubstituted or support one or two substituents from the group -SO₃H or -CH.

14. Abrasion-resistant monofilaments of enhanced processing safety, characterised in that they consist of a polyester mixture of Claim 1 and have an initial modulus at 25°C which is greater than 4 N/tex.

15. Abrasion-resistant monofilament according to Claim 14, characterised in that it has a fineness-related maximum tensile force of 20 to 30 cN/tex and a maximum tensile force elongation of 50 to 70%.

16. Abrasion-resistant monofilament according to at least one of Claims 14 and 15, characterised in that it has a dry heat shrinkage rate of 15 to 40% at 180°C and a boiling shrinkage rate of 3 to 10%.

17. A method of producing the abrasion-resistant polyester mixture according to Claim 1, characterised in that the polymer components which possibly contain available non-polymeric constituents are combined with one another in the desired proportions immediately upstream of the extruder intake and in that homogenisation takes place in the intake and mixing part of the extruder screw.

18. A method of producing the monofilaments according to Claim 14, characterised in that an abrasion-resistant polyester mixture according to Claim 1 is melted in an extruder, filtered in a conventional spinning pack and, at a melting temperature of 210 to 245°C, spun through a spinneret with a spinning draft of 1:2 to 1:4, cooled in a spinning bath and pulled off or wound up at a speed which is greater than the extrusion velocity of the copolyester melt, after which the spun thread produced is subjected to a secondary stretching in a total stretching ratio of 1:4 to 1:8 and then, at temperatures of 160 to 240°C, is thermally set at a constant length or subject to an admissible 10 to 30% shrinkage.

19. A method according to Claim 18, characterised in that spinning is carried out at a melting temperature in the range from 210 to 235°C.

20. A method according to at least one of Claims 18 and 19, characterised in that the monofilaments are drawn off at a spinning draw-off rate of 5 to 30 m per minute.

21. Use of the abrasion-resistant monofilaments according to Claim 14 in the production or for the production of paper machinery screens.

22. A paper machinery screen characterised in that it contains monofilaments consisting of an abrasion-resistant polyester mixture according to Claim 1.

## Revendications

1. Mélange à base de polyester résistant à l'abrasion à sécurité de mise en oeuvre accrue, constitué par un polyester thermoplastique, par un polyuréthanne thermoplastique et, le cas échéant, par des additifs habituels de type non polymère, caractérisé en ce que la matière polymère du mélange à base de polyester est constituée du polyester thermoplastique jusqu'à concurrence de 60 à 95% en poids et du polyuréthanne thermoplastique jusqu'à concurrence de 5 à 40% en poids, en ce que le polyester contient, à concurrence d'au moins 70 moles % rapportés à l'ensemble de tous les groupes édificateurs de polyester, des groupes édificateurs qui dérivent d'acides dicarboxyliques aromatiques et de diols aliphatiques, et à concurrence d'une valeur maximale de 30 moles % rapportés à l'ensemble de tous les groupes édificateurs de polyester, des groupes édificateurs d'acides dicarboxyliques et de diols qui sont différents des groupes édificateurs qui forment la fraction prépondérante des groupes édificateurs, en ce que le polyester présente un point de transition vitreuse de 68 à 82°C, un point de cristallisation de 135 à 155°C et un point de fusion dans le domaine de 175°C à 235°C, et en ce que le point de fusion du mélange à base polyester et polyuréthanne se situe entre 200 et 230°C.

2. Mélange à base de polyester résistant à l'abrasion selon la revendication 1, caractérisé en ce que le mélange à base de polyester contient, jusqu'à concurrence de 10% en poids, des substances de type non polymère telles que des additifs de modification, des matières de charge, des pigments, des colorants, des antioxydants, des stabilisateurs contre l'effet de l'hydrolyse, contre l'effet de la lumière et contre l'effet de la température et/ou des adjuvants de traitement.

3. Mélange à base de polyester résistant à l'abrasion selon au moins une des revendications 1 et 2, caractérisé en ce que la matière polymère du mélange à base de polyester est constituée du polyester thermoplastique jusqu'à concurrence de 70 à 90% en poids et du polyuréthanne thermoplastique jusqu'à concurrence de 10 à 30% en poids.

4. Mélange à base de polyester résistant à l'abrasion selon au moins une des revendications 1 à 3, caractérisé en ce que le polyester présente un point de transition vitreuse de 72 à 80°C, un point de cristallisation de 140 à 150°C et un point de fusion dans le domaine de 175°C à 235°C.

5. Mélange à base de polyester résistant à l'abrasion selon au moins une des revendications 1 à 4, caractérisé en ce que le polyester présente une viscosité en fusion mesurée à une température de 245 ± 2°C et à un gradient de cisaillement de 200 ± 5 s⁻¹ de 445 à 482 Pa.s, de préférence de 455 à 475 Pa.s, en particulier de 460 à 468 Pa.s, et à la même température et à un gradient de cisaillement de 1200 ± 5 s⁻¹ de 245 à 282 Pa.s, de préférence de 250 à 272, en particulier de 255 à 270 Pa.s.

6. Mélange à base de polyester résistant à l'abrasion selon au moins une des revendications 1 à 5 caractérisé en ce que le polyester contient, jusqu'à concurrence d'une valeur maximale de 30 moles % rapportés à l'ensemble de tous les groupes édificateurs du polyester, des groupes édificateurs de polyester constitués par des groupes édificateurs d'acides dicarboxyliques aromatiques qui sont différents des groupes édificateurs d'acides dicarboxyliques aromatiques qui forment la fraction prépondérante des groupes édificateurs d'acides dicarboxyliques, ou par des radicaux d'acides dicarboxyliques araliphatiques contenant un ou plusieurs, de préférence un ou deux noyaux aromatiques condensés ou non condensés, ou encore par des acides dicarboxyliques aliphatiques cycliques ou acycliques contenant de 4 à 12 atomes de carbone et par des groupes édificateurs de diols qui dérivent de diols ramifiés et/ou à longues chaînes contenant de 3 à 10, de préférence de 3 à 6 atomes de carbone, ou de diols cycliques ou encore de diols contenant des groupes éther, ou bien du polyglycol possédant un poids molaire de 500 à 2000, des groupes édificateurs du diol dérivant du polyglycol étant présents uniquement en une quantité inférieure à 5 moles %.

7. Mélange à base de polyester résistant à l'abrasion selon au moins une des revendications 1 à 6, caractérisé en ce que le polyester, rapporté à l'ensemble des groupes édificateurs de polyester, est constitué par
à concurrence de 35 à 47 moles %, des groupes édificateurs répondant à la formule
-CO-A¹-CO- (I)
à concurrence de 3 à 15 moles %, des groupes édificateurs répondant à la formule
-CO-A²-CO- (II)
à concurrence de 35 à 50 moles %, des groupes édificateurs répondant à la formule
-O-D¹-O- (III)
à concurrence de 0 à 15 moles %, des groupes édificateurs répondant à la formule
-O-D²-O- (IV)
formules dans lesquelles
A¹ représente des radicaux aromatiques contenant de 5 à 12, de préférence de 6 à 10 atomes de carbone,
A² représente des radicaux aromatiques différents de A¹ ou des radicaux araliphatiques contenant de 5 à 16, de préférence de 6 à 12 atomes de carbone, ou des radicaux aliphatiques contenant de 4 à 10 atomes de carbone, de préférence de 4 à 8 atomes de carbone,
D¹ représente des groupes alkylène ou des groupes polyméthylène contenant de 2 à 4 atomes de carbone, ou encore des groupes cycloalcane ou diméthylènecycloalcane contenant de 6 à 10 atomes de carbone,
D² représente des groupes alkylène ou des groupes polyméthylène contenant de 3 à 4 atomes de carbone, ou des groupes cycloalcane ou diméthylènecycloalcane contenant de 6 à 10 atomes de carbone, ou encore des groupes alcanediyle à chaînes droites ou ramifiées contenant de 4 à 16, de préférence de 4 à 8 atomes de carbone différents de D¹, ou encore des radicaux répondant à la formule -(C₂H₄-O)ₘ-C₂H₄- dans laquelle m représente un nombre entier de 1 à 40, des fractions jusqu'à concurrence de 20 moles %, dans lesquelles m = 1 ou 2, étant préférées, et des groupes dans lesquels m = 10 à 40 étant de préférence présents uniquement dans des fractions inférieures à 5 moles %.

8. Mélange à base de polyester résistant à l'abrasion selon au moins une des revendications 1 à 7, caractérisé en ce que le polyester contenu dans les mélanges à base de polyester selon l'invention possède une viscosité relative de 1,6 à 2,2, de préférence de 1,8 à 2,0, mesurée dans une solution du polyester à 1% en poids dans de l'acide dichloracétique à une température de 25°C.

9. Mélange à base de polyester résistant à l'abrasion selon au moins une des revendications 1 à 8, caractérisé en ce que le polyuréthanne présente un module de cisaillement qui possède, dans la plage de température de 20 à 60°C, une valeur de 8 à 80 MPa, de préférence de 20 à 50 MPa, un facteur de perte mécanique tan(δ) qui possède dans la plage de température de 20 à 60°C, une valeur de 0,8.10⁻² à 1,2.10⁻¹, une dureté Shore A mesurée conformément à la norme DIN 53505 de 82 à 100, une dureté Shore D mesurée conformément à la norme DIN 53505 de 30 à 60, une résistance à la déformation par traction mesurée conformément à la norme DIN 53504 de 32 à 42 MPa, un allongement à la rupture mesuré conformément à la norme DIN 53504 de 420 à 520% et une résilience mesurée conformément à la norme DIN 53515 de 32 à 45%.

10. Mélange à base de polyester résistant à l'abrasion selon au moins une des revendications 1 à 9, caractérisé en ce que le polyuréthanne thermoplastique répond à la formule idéalisée V 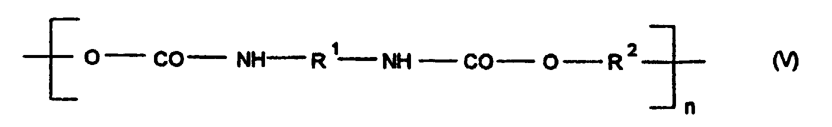 dans laquelle
R¹ représente un radical aromatique ou araliphatique à deux liaisons contenant de 6 à 18 atomes de carbone, contenant un noyau aromatique le cas échéant substitué ou contenant deux noyaux aromatiques condensés ou non condensés le cas échéant substitués,
R² représente un groupe édificateur de polyéther répondant à la formule VI 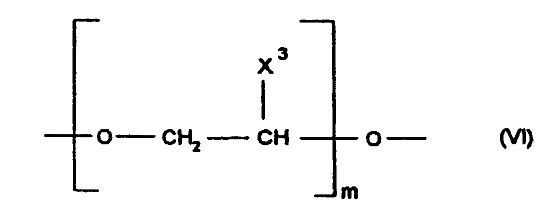
dans laquelle
X³ représente un atome d'hydrogène ou un groupe méthyle et
m représente un nombre de 10 à 100, de préférence de 10 à 30, ou encore le radical polytétrahydrofuranne ou de préférence un groupe édificateur du polyester répondant à la formule VII 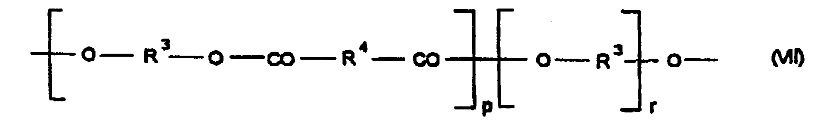
dans laquelle
R³ représente un radical alcanediyle ou un radical oxa-alcanediyle à chaîne droite ou le cas échéant ramifiée contenant de 2 à 8, de préférence de 2 à 6 atomes de carbone, tel que par exemple un radical éthylène, un radical propane-1,3-diyle, un radical butane-1,4-diyle, un radical hexane-1,6-diyle, un radical 2-éthylhexane-1,6-diyle, un radical 2,2-diméthylpropane-1,3-diyle ou encore les radicaux oxa-alcanediyle bivalents dérivant du diéthylèneglycol ou du triéthylèneglycol,
R⁴ représente un radical alcanediyle contenant de 2 à 6, de préférence de 2 à 4 atomes de carbone, un radical cycloalcanediyle tel qu'un radical cyclohexane, un radical 1,4- ou 1,3-diyle, ou encore un radical aromatique à deux liaisons contenant de 6 à 12 atomes de carbone, de préférence de 6 à 10 atomes de carbone, en particulier le 1,3- ou le 1,4-phénylène,
p représente un nombre qui est sélectionné de telle sorte que le radical R⁴ possède un poids molaire de 1000 à 2000 (p = 5 à 12, de préférence 8 à 11) et q représente, soit 0, soit 1.

11. Mélange à base de polyester résistant à l'abrasion selon au moins une des revendications 1 à 8, caractérisé en ce que le polyuréthanne thermoplastique répond à la formule idéalisée V dans laquelle R¹ représente un groupe phénylène, un groupe naphtylène ou un groupe édificateur répondant aux formules VIII ou IX 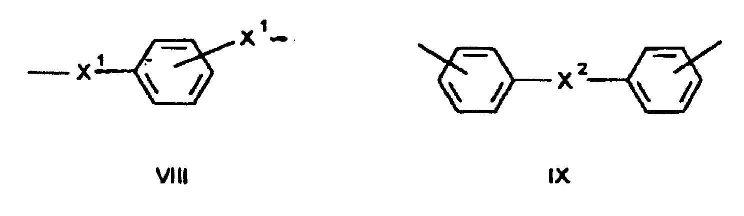 qui le cas échéant peuvent porter des substituants, formules dans lesquelles
X¹ représente un radical aliphatique à deux liaisons contenant de 1 à 3 atomes de carbone, et
X² représente une liaison directe, un radical aliphatique à deux liaisons contenant de 1 à 3 atomes de carbone, un radical -CO-, un radical -SO₂- ou un radical -NH-CO-NH-.

12. Mélange à base de polyester résistant à l'abrasion selon au moins une des revendications 1 à 8, caractérisé en ce que le polyuréthanne thermoplastique répond à la formule idéalisée V dans laquelle R¹ représente un groupe édificateur répondant à la formule X

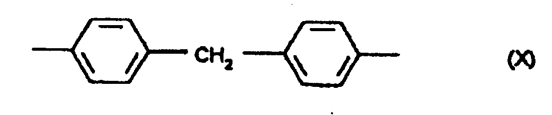

13. Mélange à base de polyester résistant à l'abrasion selon au moins une des revendications 1 à 8, caractérisé en ce que le polyuréthanne thermoplastique répond à la formule idéalisée V, les noyaux aromatiques qui y sont contenus étant non substitués ou portant un ou deux substituants choisis parmi le groupe comprenant un radical -SO₃H ou un radical -CH.

14. Monofilaments résistant à l'abrasion à sécurité de mise en oeuvre accrue, caractérisés en ce qu'ils sont constitués par un mélange à base de polyester selon la revendication 1 et en ce qu'ils présentent un module initial à 25°C supérieur à 4 N/tex.

15. Monofilament résistant à l'abrasion selon la revendication 14, caractérisé en ce qu'il présente une force de traction maximale rapportée à la finesse de 20 à 30 cN/tex et un allongement maximal à la traction de 50 à 70%.

16. Monofilament résistant à l'abrasion selon au moins une des revendications 14 et 15, caractérisé en ce qu'il présente un retrait à la chaleur sèche, mesuré à 180°C, de 15 à 40%, et un retrait à la cuisson de 3 à 10%.

17. Procédé pour la préparation du mélange à base de polyester résistant à l'abrasion selon la revendication 1, caractérisé en ce qu'on combine les composants polymères - qui contiennent des constituants de type non polymère présents le cas échéant - les uns avec les autres directement avant l'entrée dans l'extrudeuse dans un rapport quantitatif désiré et on effectue l'homogénéisation dans la zone d'entrée et de mélange de la vis sans fin de l'extrudeuse.

18. Procédé pour la préparation des monofilaments selon la revendication 14, caractérisé en ce qu'on porte à fusion un mélange à base de polyester résistant à l'abrasion selon la revendication 1 dans une extrudeuse, on le filtre dans un ensemble de filature habituel et on le file à une température de la masse fondue de 210 à 245°C à travers une filière avec un étirage par filature de 1:2 à 1:4, on le refroidit dans un bain de filage et on l'enroule ou on le tire avec une vitesse qui est supérieure à la rapidité de projection de la masse fondue du copolyester, on soumet ensuite le filé ainsi obtenu à un étirage ultérieur dans un rapport d'étirage total de 1:4 à 1:8, puis on le soumet à un thermofixage à des températures de 160 à 240°C, à une longueur constante ou en acceptant un retrait de 10 à 30%.

19. Procédé selon la revendication 18, caractérisé en ce qu'on procède à la filature à une température de la masse fondue dans le domaine de 210 à 235°C.

20. Procédé selon au moins une des revendications 18 et 19, caractérisé en ce qu'on tire les monofilaments à une vitesse de tirage par filature de 5 à 30 m/min.

21. Utilisation des monofilaments résistant à l'abrasion selon la revendication 14 lors de la fabrication ou pour la fabrication de toiles destinées à des machines de fabrication du papier.

22. Toile pour des machines de fabrication du papier, caractérisée en ce qu'elle contient des monofilaments constitués par un mélange à base de polyester résistant à l'abrasion selon la revendication 1.
